# FASCICULE DE BREVET EUROPEEN

(11) **EP 2 297 221 B1**
(45) Date de publication et mention de la délivrance du brevet: **04.09.2013**
(21) Numéro de dépôt: 09784451.8
(22) Date de dépôt: 30.06.2009
(51) Int. Cl.: C08G 59/38, C08G 59/54, C08L 63/00, C09D 163/00, G21F 9/16, G21F 9/30

(54) **COMPOSITION D'ENROBAGE POUR LE STOCKAGE DE DÉCHETS TOXIQUES POUR LA SANTÉ ET/OU L'ENVIRONNEMENT DÉPOURVUE D'AGENT DURCISSEUR AMINE AROMATIQUE**
BESCHICHTUNGSZUSAMMENSETZUNG ZUR LAGERUNG VON GESUNDHEITS- BZW: UMWELTGEFÄHRDENDEM MÜLL OHNE AROMATISCHE AMINHÄRTER
COATING COMPOSITION FOR THE STORAGE OF WASTE THAT IS TOXIC TO HEALTH AND/OR THE ENVIRONMENT, WHICH IS FREE FROM AN AROMATIC AMINE CURING AGENT

(30) Priorité: 30.06.2008 FR 0854372
(43) Date de publication de la demande: 23.03.2011
(73) Titulaire: CCP Composites, 92400 Courbevoie (FR)
(72) Inventeur: DHERSIN, Christine, F-62113 Sailly Labourse (FR)
(74) Mandataire: Ulmann, Catherine Claire
(86) Numéro de dépôt international: PCT/FR2009/051266
(87) Numéro de publication internationale: WO 2010/004189

(56) Documents cités:
- EP-A- 1 000 957
- FR-A- 2 825 182
- US-A- 4 507 363

## Description

L'invention concerne une composition d'enrobage pour le stockage ou le confinement de déchets toxiques pour la santé et/ou l'environnement, comprenant une composition à base de résine époxy et une composition de durcissement dépourvue d'agent durcisseur amine aromatique.

L'invention concerne également l'utilisation de cette composition pour l'enrobage desdits déchets.

Les résines échangeuses d'ions utilisées pour purifier l'eau des installations nucléaires, qui, après utilisation et perte d'efficacité, doivent être stockées alors qu'elles ont fixé des radioéléments et présentent, de ce fait, une certaine radioactivité. D'autres éléments utilisés dans les centrales nucléaires, tels que les barreaux de magnésium, sont également contaminés après utilisation.

D'autres déchets, notamment non radioactifs, tels que des métaux lourds ou des matériaux contaminés par des métaux lourds nécessitent un confinement pour éviter leur dissémination dans l'environnement.

Ce type de déchets toxiques pour la santé et/ou l'environnement, en particulier les déchets radioactifs, doivent être stockés en respectant des règles de sécurité en vigueur.

On connaît un certain nombre de techniques pour enrober ces déchets en vue de leur stockage, mettant en jeu l'utilisation de résines d'enrobage époxy ou polyester, ou encore des techniques de vitrification permettant l'inactivation de ces déchets.

La demande FR 2 825 182 décrit un système matriciel pour l'enrobage et le stockage d'un produit dangereux, dans lequel la composition d'enrobage comprend une résine époxy et une substance absorbant l'eau, permettant d'enrober des résines échangeuse d'ions à teneur élevée en eau résiduelle.

Un procédé décrit dans le brevet US 4 599 196 met en oeuvre un traitement préalable des résines échangeuse d'ions cationiques pour en atténuer le caractère acide, la composition de durcissement devant être adaptée en fonction de cette acidité.

Le brevet US 5 416 251 décrit un procédé d'enrobage de résine échangeuse d'ions dans lequel l'eau de ruissellement est bloquée par un agent hydrophobe formant un film, afin d'éviter l'inhibition de la réaction entre la résine et le durcisseur.

Cependant, les compositions d'enrobage, qui comprennent une composition à base de résine époxy et une composition de durcissement, peuvent contenir, comme agent durcisseur, des amines aromatiques qui sont déconseillées par les normes sanitaires en vigueur ou sont susceptibles de le devenir. En effet, certains d'entre eux comportent des risques classés « CMR » (cancérigène, mutagène et/ou toxique pour la reproduction). Bien que leur utilisation soit tolérée dans des conditions d'utilisation précises, il est recherché de les substituer par des produits ne présentant pas ces inconvénients.

Il existe donc un besoin d'une composition d'enrobage de déchets toxiques qui soit stable aux radiations, aisément manipulable à température ambiante et qui présente les propriétés de sécurité requises en matière, notamment de résistance à la compression et à la lixiviation, sans nécessiter de traitement préalable particulier du déchet à traiter, et ne comportant pas d'agent durcisseur amine aromatique, ceci sans que la réaction époxy-amine soit affectée par la présence d'eau et en l'absence de tout rajout additionnel d'agent spécifique absorbant l'eau, en plus du système réactionnel époxy-amine global (c'est à dire hormis les composants réactifs du système époxy-amine).

Selon une alternative de l'invention, ladite composition d'enrobage peut être dépourvue d'agent durcisseur aromatique.

On a maintenant trouvé que l'utilisation d'amidoamines en tant qu'agent durcisseur permet d'obtenir une composition d'enrobage remplissant ces objectifs et critères.

Par « amidoamine », on entend le produit de la réaction entre une polyamine aliphatique et un acide gras, ayant des fonctions terminales et/ou latérales amines (amidification avec excès d'amine par rapport à CO₂H).

Le choix de ces amines particulières comme durcisseur présente de nombreux avantages :
- elles ne sont pas classées parmi les produits « CMR» (cancérigènes mutagènes et/ou toxiques pour la reproduction) ou susceptibles de l'être,
- la présence simultanée de nombreuses fonctions amines assure la formation de nombreuses liaisons C-N avec les groupes époxy de la résine, permettant la formation d'un réseau époxydique plus compact :il en résulte une stabilité améliorée aux radiations et aux sollicitations mécaniques de type compression (stabilité à la déformation) et, plus particulièrement, une résistance à la compression non affectée après exposition aux rayonnements ionisants,
- leur cinétique de réticulation, relativement lente et contrôlée (réactivité contrôlée), permet de maîtriser la réactivité lors de la réticulation sans que la réactivité des composants réactifs soit affectée par la présence éventuelle d'eau, et ceci en l'absence de toute substance absorbant l'eau autre que les composants réactifs du système époxy-amine,
- elles peuvent être aisément mises en oeuvre à température ambiante (10-40°C, de préférence 15-30°C), du fait de leur faible viscosité, de préférence inférieure à 4 Pa.s à 25°C, et ceci par simple mélange des composants.

Par « réticulation », on entend le branchement de chaînes de polymères entre elles par des ponts ou liaisons chimiques, afin de constituer un réseau macromoléculaire tridimensionnel de masse moléculaire infinie et présentant des propriétés physico-chimiques différentes du polymère initial. Dans le cas des résines thermodurcissables, celles-ci passent d'un état pâteux à un état solide. La réticulation est l'aboutissement de la polymérisation et est un processus irréversible résultant dans l'obtention d'un polymère tridimensionnel solide, infusible et insoluble.

Dans le cas des résines époxy, la réticulation s'effectue par réaction avec un durcisseur, ou, plus précisément, par réaction d'une composition de résine époxy avec une composition de durcissement (à base d'amines) exempte d'amine aromatique.

Selon une alternative de l'invention, ladite composition de durcissement peut être dépourvue d'agent durcisseur aromatique.

L'invention concerne donc, selon un premier aspect, une composition d'enrobage pour le stockage ou le confinement de déchets toxiques pour l'environnement et/ou la santé, qui comprend une composition à base de résine époxy et une composition de durcissement, ladite composition de durcissement comprenant un durcisseur constitué d'au moins une amidoamine, ladite composition d'enrobage étant dépourvue d'agent durcisseur amine aromatique.

En particulier, ladite composition d'enrobage peut être dépourvue d'agent durcisseur aromatique.

Ladite amidoamine est le produit de la réaction entre une ou plusieurs polyéthylènepolyamine(s) aliphatiques et un ou plusieurs acide(s) gras mono- ou poly-insaturés, et plus préférentiellement entre des oligoéthylèneamines et des acides gras mono- ou poly-insaturés en C₁₂-C₁₈.

Ladite composition d'enrobage est dépourvue de toute substance absorbant l'eau rajoutée en plus des composés réactifs du système époxy-amine. En effet, les amidoamines présentes dans la composition réactionnelle constituent un des composants réactifs du système époxy-amine, et peuvent réagir avec l'eau, par hydrolyse, ce qui permet de surmonter le problème de l'influence de l'eau de ruissellement sur le durcissement (c'est à dire sur la réaction de réticulation entre époxy et amine).

La composition d'enrobage comprend de 50 à 80%, en particulier 60 à 70%, en poids de composition à base de résine époxy et de 20 à 50%, en particulier 30 à 40%, en poids de la composition de durcissement.

### Composition de durcissement

La composition de durcissement utilisable dans la composition d'enrobage selon l'invention comprend, avantageusement au moins une amidoamine faiblement réactive, c'est à dire ayant une cinétique de réticulation relativement lente et contrôlée On utilisera de préférence une ou plusieurs amidoamine(s) ayant une durée de vie en pot jusqu'à gélification, c'est à dire jusqu'à viscosité tendant vers l'infini (en anglais « pot life ») à 25°C de 400 à 700 min, mesurée par la méthode du Gel timer sur 150 g de mélange avec une résine époxy diglycidyléther de bisphénol A (DGEBA).

Avantageusement, ladite amidoamine ou ledit mélange d'amidoamines a une viscosité à 25°C de l'ordre de 0,2 à 2 Pa.s.

De préférence, on utilisera une ou plusieurs amidoamine(s) ayant un indice d'amine, correspondant à une masse équivalente par hydrogène actif, de l'ordre de 90 à 110 g/H.

Des amidoamines particulièrement préférées aux fins de l'invention peuvent être, par exemple, choisies parmi les produits suivants, qui sont des produits de réaction entre :
- une ou plusieurs polyéthylènepolyamine(s) (amine(s) aliphatique(s) par définition) de préférence choisie(s) parmi les oligoéthylèneamines, et plus préférentiellement, parmi les polyéthylènetétramines et les polyéthylènepentamines, telles que, par exemple la diéthylènetriamine, la triéthylènetétramine, la tétraéthylènetétramine, la tétraéthylènepentamine ou la bis(3arninopropyl)éthylènediamine, et
- un ou plusieurs acide(s) gras mono- ou poly-insaturé(s) en C₁₂-C₁₈ (mono et/ou polyacides), tel(s) que, par exemple, l'acide oléique, linoléique, linolénique, l'acide palmitoléique ou l'acide myristique, de préférence, les acides gras poly-insaturés gras d'origine végétale, tels que les acides gras d'origine végétale contenus dans les résidus de distillation du bois, désignés en anglais par le terme« Tall oil », l'acide linoléique et l'acide alpha- ou gamma-linolénique étant particulièrement préférés.

Par ailleurs, les amidoamines sont susceptibles de se trouver en équilibre réversible avec la forme cyclisée imidazoline. On utilisera de préférence une amidoamine ou un mélange d'amidoamines riche en imidazoline(s), dont la réactivité permet de réguler la vitesse de la réaction de réticulation et qui, avantageusement, sont suceptible(s) de réagir avec l'eau amenée par les déchets humides.

Une amidoamine préférée aux fins de l'invention est le produit de la réaction entre la tétraéthylènepentamine et les acides gras d'origine végétale contenus dans les résidus de distillation du bois, désignés de manière usuelle en anglais par le terme TOFA (pour « Tall Oil Fatty Acids »).

### Composition de résine

La composition de résine utilisable dans la composition d'enrobage selon l'invention est de préférence choisie de telle manière qu'elle assure une bonne complémentarité avec la composition de durcissement, notamment en termes de cinétique de durcissement et d'apport à la résistance mécanique du bloc de déchet enrobé. Cette résistance mécanique peut s'exprimer en termes de résistance à la compression, flexion, cisaillement, performances viscoélastiques, etc.

La composition de résine peut comprendre un mélange contenant la résine époxy ainsi que un ou plusieurs additifs, notamment choisis parmi des diluants réactifs ou plastifiants (non réactifs), des agents modificateurs de rhéologie, notamment agents thixotropes et des agents tensioactifs du type alcools gras éthoxylés ou esters d'acides gras et de polyols, ayant un rôle d'émulsifiant dans le cas de déchets aqueux, ou de mouillant dans le cas de déchets solides ou des agents séquestrants, du type EDTA (acide éthylènediaminetétraacétique) dans le cas de déchets métalliques ou déchets contenant des ions métalliques.

La résine époxy utilisable dans la composition d'enrobage aux fins de l'invention est, de préférence, une résine époxy dont la masse équivalente par époxy est comprise entre 190 et 210 g/mol. Ladite résine époxy incorpore éventuellement un diluant réactif, de préférence choisi parmi les monoépoxydes ou les époxydes multifonctionnels de viscosité inférieure à 0,5 Pa.s à 25°C.

Ladite résine époxy a un taux d'aromaticité élevé de 40 à 50% exprimé en pourcentage d'atomes de carbone aromatiques sur le nombre total d'atomes de carbone de la résine époxy.

Avantageusement, le nombre de fonctions époxy, par molécule (monomère) de ladite résine époxy est de 2 à 5.

Ladite résine époxy aura, par exemple, une masse molaire en g/mol d'environ 300 à 800 g/mol, ce qui correspond à une masse équivalente par époxy située entre 125 et 225 exprimée en g/mol.

Une résine époxy préférée est une résine résultant de la réaction entre le bisphénol A et l'épichlorhydrine, en particulier la résine diglycidyléther de bisphénol A (DGEBA).

Selon un aspect préféré de l'invention, on utilisera un mélange de résines époxy de fonctionnalité d'au moins 2, de manière à augmenter la densité de liaisons (densité de réticulation) lors de la réticulation.

On utilisera, de préférence, un mélange de résine époxy bifonctionnelle, telle qu'une résine résultant de la réaction entre le bisphénol A et/ou le bisphénol F et l'épichlorhydrine, et d'au moins une résine polyfonctionnelle, c'est-à-dire une résine époxy ayant un nombre de fonctions époxy par monomère supérieur à 2, telles que, par exemple, les résines époxy de type phénol novolaque ou époxy tris(hydroxyphényl)méthane etc.

La composition de résine comprend, de préférence, un diluant époxyde réactif (par rapport aux amines), de préférence monofonctionnel ou polyfonctionnel, et plus préférentiellement de viscosité à 25°C inférieure à 0,5 Pa.s, qui participe à la réaction entre les composés amines de la composition de durcissement et la résine époxy. Des diluants réactifs utilisables sont, par exemple, le p-tert-butylphénylglycidyléther, le crésylglycidyléther, l'éthylhexylglycidyléther ou triépoxyde comme le triglycidyléther de triméthylolpropane, le triglycidyl éther de glycérol. On utilisera de préférence un diluant aromatique, en particulier le p-tert-butylphénylglycidyléther.

Avantageusement, le choix d'un diluant aromatique permet d'augmenter le taux d'aromaticité du polymère, et, de ce fait, la résistance aux radiations de la composition d'enrobage.

La composition de résine peut également comprendre, le cas échéant, un diluant plastifiant (non réactif) choisi, de préférence, parmi les solvants lourds, c'est-à-dire ayant un poids moléculaire de 140 à 600 g/mol, et de préférence, 140 à 500 g/mol, hydrophobes et miscibles aux amines de durcissement.

Ces composés permettent d'éviter la fissuration du bloc de déchet enrobé lors de chocs thermiques et d'ajuster la viscosité de la composition de durcissement, ainsi que d'éviter l'exsudation d'eau résiduelle et d'imperméabiliser la composition d'enrobage (résistance à la lixiviation).

On utilisera, par exemple, comme composé diluant plastifiant, un composé choisi parmi les éthers de glycol lourds, comme l'éther méthylique de tripropylèneglycol ; les esters aromatiques, comme l'acétate de benzyle; l'oxyde de benzyle; les phtalates d'alkyle en C₈-C₁₂, en particulier le phatalate d'isononyle ou d'iso-undécyle et leurs mélanges.

Avantageusement, la composition de résine de ladite composition d'enrobage selon l'invention comprend un agent thixotrope qui permet de contrôler la baisse de la viscosité, en particulier au début de la réaction, et participe à la maîtrise de l'exothermie.

On utilisera, de préférence, un agent thixotrope hydrophobe qui permet, en particulier l'obtention d'un déchet enrobé de manière homogène, en limitant la remontée du déchet dans la composition d'enrobage lorsqu'il est léger, par exemple dans le cas de résines échangeuse d'ions.

Des agents thixotropes hydrophobes utilisables peuvent être choisis, par exemple, parmi la silice pyrogénée hydrophobe et l'argile modifiée organophile telle qu'obtenue par modification par le greffage d'un agent greffant organique hydrophobe.

Selon la nature du déchet à enrober, la composition de résine peut également comprendre un ou plusieurs agent(s) tensioactif(s) ou agent(s) séquestrant(s), comme décrit plus haut.

Notamment, dans le cas de l'enrobage de résines échangeuses d'ions on utilisera un agent tensioactif pour améliorer la cohésion par un meilleur mouillage et une meilleure adhésion entre la composition d'enrobage et la résine échangeuse d'ions à enrober. On utilisera dans ce cas, de préférence, un agent tensioactif non ionique, notamment un agent tensioactif non ionique non dilué dans l'eau (anhydre) hydrophile, tel que, par exemple, ceux choisis parmi les alcools gras éthoxylés et les polyéthers de siloxane.

Dans le cas d'autres déchets à enrober, notamment pour l'enrobage de métaux, on utilisera un agent séquestrant ou complexant approprié comportant des groupements qui interagissent avec l'élément métallique à enrober, par exemple des groupements -CO₂H, comme l'EDTA.

Le type d'agent tensioactif ou séquestrant à inclure dans la composition de résine pourra varier en fonction des besoins et de l'effet souhaité.

De préférence, la composition de résine comprend, par rapport au poids total de la composition de résine :
- 70 à 90% en poids d'une résine époxy ou d'un mélange de résine époxy, de préférence 85 à 90%,
- 5 à 15% en poids d'un diluant réactif, de préférence 8 à 12%,
- 5 à 15% en poids d'un diluant plastifiant, de préférence 5 à 10%,
- 0 à 3% en poids d'un agent thixotrope, de préférence 1 à 2%, et
- 0 à 2% d'au moins un agent tensioactif ou séquestrant,
la somme des composants de la composition de résine n'excédant pas 100%.

De manière optionnelle, on peut également ajouter à la composition d'enrobage, après mélange de la composition de durcissement et de la composition de résine, un additif de renfort permettant d'améliorer les propriétés mécaniques ainsi que la résistance aux radiations du bloc de déchet enrobé, par exemple à raison de 0 à 10% en poids total de la composition d'enrobage.

On peut utiliser, par exemple, des fibres de verre courtes, des fibres de carbone, des fibres céramiques ou des fibres organiques de synthèse, les fibres de verre, de carbone et les fibres céramiques étant préférées Le choix du type de matériau ou additif de renfort sera fonction du niveau des propriétés de résistance recherchées.

L'invention concerne également l'utilisation d'une composition d'enrobage telle que définie plus haut pour la préparation d'un bloc de déchet enrobé, ainsi que le bloc de déchet enrobé ainsi obtenu.

En particulier, ledit bloc de déchet enrobé peut comprendre de 30 à 60% en poids de composition d'enrobage et de 70 à 40% en poids de déchet.

Ledit bloc de déchet enrobé peut être préparé par un procédé comprenant les étapes consistant à :
i) préparer une composition d'enrobage par mélange d'une composition de résine et d'une composition de durcissement telles que définies ci-dessus, et
ii) incorporer le déchet à enrober dans ladite composition d'enrobage, et
iii) enrober et réticuler jusqu'à obtention d'un bloc de déchet enrobé et durci.

De manière optionnelle, on ajoutera un additif de renfort à la composition d'enrobage dans une étape intermédiaire se situant avant l'incorporation de déchet à enrober et après la préparation de la composition d'enrobage.

Le mélange de la composition de résine et de la composition de durcissement peut être effectué, par exemple, à une température de15 à 30°C. Si nécessaire, la composition de résine, d'une part, et la composition de durcissement, d'autre part, peuvent être chauffées ou refroidies avant mélange, notamment jusqu'à une température de 20 à 25°C.

Le déchet à enrober peut être un déchet sous forme solide, éventuellement divisée, ou sous forme semi-liquide, telle qu'une boue ou une pâte visqueuse.

En particulier, la composition d'enrobage peut être utilisée pour stocker ou confiner des déchets radioactifs, tels que, par exemple, des résines échangeuses d'ions anioniques ou cationiques et leurs mélanges, des barreaux de magnésium contaminés, des pièces métalliques irradiées telles que pièces irradiées par une faible ou moyenne radioactivité ou les cendres radioactives. Donc, la composition selon l'invention est particulièrement utile et utilisée pour l'enrobage et le stockage et/ou le confinement de déchets toxiques pour la santé et/ou pour l'environnement.

La composition d'enrobage peut alternativement être utilisée pour stocker ou confiner des déchets toxiques non radioactifs, tels que, par exemple, des métaux lourds ou des matériaux en contenant, des pièces métalliques divisées provenant du démantèlement d'ateliers industriels ou des produits générant ou libérant des substances nocives, telles que la dioxine, le phosgène, NH₃, morpholine, hydrazine, SO₂ ou SO₃.

Le déchet enrobé par la composition d'enrobage selon l'invention, sous forme de bloc, présente des propriétés de résistance à la compression élevées, ainsi qu'une bonne résistance chimique aux agressions des agents acides ou basiques, ou des agents oxydants, de la lumière, ainsi qu'une résistance élevée à la lixiviation. Il présente des bonnes performances mécaniques en compression, en particulier après exposition à un rayonnement ionisant, ainsi qu'une résistance en cisaillement, avec d'excellentes performances mécaniques dynamiques.

L'invention est illustrée de manière non limitative par les exemples suivants.

### Exemple 1 : préparation d'une composition d'enrobage

On a préparé la composition d'enrobage suivante :
1) Composition de résine époxy

| **Composant** | **Teneur (en % pondéral)** |
|---|---|
| Résine époxy diglycidyléther de bisphénol A (DGEBA) fonctionnalité f = 2 | 77,8 |
| Résine époxyphénol novolaque (de masse équivalente époxy 170-180g/mol) f > 2 | 9,85 |
| p-*tert*-butylphénylglycidyléther (diluant réactif) | 10,85 |
| Silice pyrogénée hydrophobe (agent thixotrope) | 1,5 |

2) Composition de durcissement avec 50*p de composition de durcisseur pour 100p de composition de résine époxy (soit* 33,3% *de durcisseur)*

| **Composant** | **Teneur (en % pondéral)** |
|---|---|
| Produit de réaction entre la tétraéthylènepentamine et les acides gras d'origine végétale contenus dans les résidus de distillation du bois (TOFA) (Ancamide 506 d'AIR PRODUCTS) | 100 |

Le mélange a été réalisé en malaxant pendant 5 à 10 min à température ambiante comprise entre 15 et 30 C la composition de résine avec la composition de durcissement, celles-ci étant préalablement dosées et amenées à une température de 20 à 25°C. Le déchet à enrober est incorporé immédiatement après réalisation du mélange.

### Exemple 2 : enrobage d'une résine échangeuse d'ions

On mélange, dans un fût métallique de 200 I, 58 kg de composition de résine époxy et 28 kg de composition de durcissement de l'exemple 1.

Le mélange est malaxé à l'aide d'un mobile de malaxage de diamètre 520 mm, à un seul étage et 4 pales de largeur 200 mm orientées à 45°, avec un agitateur à une vitesse de 60 tours/min pendant 1 à 2 min.

119 kg de résines échangeuses d'ions polystyrèniques ou acryliques ioniquement équilibrées (Amberlite MB20 de ROHM&HAAS) sont alors immédiatement introduits sous agitation dans le mélange à un débit de 500 kg/h, puis on mélange le tout pendant 7 min à 60 tours/min, puis 7 min à 140 tours/min.

Après un arrêt de 5 min pour dégazage, le mélange est homogénéisé pendant 5 min à 140 tours/min.

On obtient un bloc de résine échangeuse d'ions enrobée de 205 kg.

Les performances de résistance à la compression après exposition aux rayonnements ionisants du bloc de résine échangeuse d'ions enrobée ainsi obtenu atteignent les spécifications de l'Agence nationale de gestion des déchets radioactifs (ANDRA).

La spécification ANDRA requiert moins de 20% de perte en résistance à la compression après exposition à un rayonnement ionisant.

Les résultats obtenus avec l'essai réalisé selon l'exemple 2, qui est représentatif de la présente invention, montrent qu'après une exposition de 20 jours, à un rayonnement gamma de débit moyen de dose de 182 Gray/h, non seulement il n'y a pas de perte de résistance à la compression après exposition dans le cas du déchet enrobé selon la présente invention, mais au contraire il y a un gain significatif de ladite résistance après exposition qui est de 18%, par rapport à la valeur correspondante avant exposition.

## Revendications

1. Composition d'enrobage pour le stockage ou le confinement de déchets toxiques pour l'environnement et/ou la santé, **caractérisée en ce que** ladite composition d'enrobage comprend de 50 à 80% en poids d'une composition de résine à base de résine époxy et de 20 à 50% en poids d'une composition de durcissement comprenant un durcisseur constitué d'au moins une amidoamine, ladite composition de durcissement étant dépourvue d'agent durcisseur amine aromatique et **en ce que** la composition de durcissement comprend un durcisseur constitué d'au moins une amidoamine choisie parmi les produits de réaction entre une ou plusieurs polyéthylènepolyamine(s) aliphatique(s) et un ou plusieurs acide(s) gras mono- ou poly-insaturé(s) en C₁₂-C₁₈, et **en ce que** ladite résine époxy a un taux d'aromaticité de l'ordre de 40 à 50%, exprimé en pourcentage d'atomes de carbone aromatiques sur le nombre total d'atomes de carbone de la résine époxy, et **en ce que** ladite composition est dépourvue de toute autre substance absorbant l'eau, en dehors des composants réactifs du système époxy-amine.

2. Composition selon la revendication 1, **caractérisée en ce que** la ladite composition de durcissement est dépourvue d'agent durcisseur aromatique.

3. Composition selon l'une des revendications 1 ou 2, **caractérisée en ce que** la polyéthylènepolyamine aliphatique est choisie parmi les polyéthylènetétramines et les polyéthylènepentamines.

4. Composition selon l'une quelconque des revendications 1 à 3, **caractérisée en ce que** la composition de résine comprend une résine époxy dont la masse équivalente par époxy est comprise entre 190 et 210 g/mol.

5. Composition la revendication 4, **caractérisée en ce que** ladite résine époxy est une résine résultant de la réaction entre le bisphénol A et/ou le bisphénol F et l'épichlorhydrine.

6. Composition selon l'une des revendications 4 ou 5, **caractérisée en ce qu'**on utilise comme résine époxy un mélange de résine époxy bifonctionnelle et d'au moins une résine époxy polyfonctionnelle de fonctionnalité supérieure à 2, de préférence de 2 à 5.

7. Composition selon l'une quelconque des revendications 4 à 6, **caractérisée en ce qu'**on utilise comme résine époxy un mélange de résine résultant de la réaction entre le bisphénol A et/ou le bisphénol F et l'épichlorhydrine et d'au moins une résine polyfonctionnelle.

8. Composition selon l'une quelconque des revendications 4 à 7, **caractérisée en ce que** la composition de résine époxy comprend au moins un additif choisi parmi les diluants réactifs ou plastifiants, les agents thixotropes hydrophobes , les agents tensioactifs et les agents séquestrants.

9. Composition selon la revendication 8, **caractérisée en ce que** l'agent thixotrope hydrophobe est choisi parmi la silice pyrogénée hydrophobe et l'argile modifiée organophile.

10. Composition selon l'une des revendications 8 ou 9, **caractérisée en ce que** le matériau de renfort est choisi parmi les fibres de verre courtes, les fibres de carbone, les fibres céramiques et les fibres organiques de synthèse.

11. Composition selon l'une quelconque des revendications 8 à 10, **caractérisée en ce que** la composition de résine comprend, par rapport au poids total de la composition de résine :
- 70 à 90% en poids d'une résine époxy ou d'un mélange de résine époxy, de préférence 85 à 90%,
- 5 à 15% en poids d'un diluant réactif, de préférence 8 à 12%,
- 5 à 15% en poids d'un diluant plastifiant, de préférence 5 à 10%,
- 0 à 3% en poids d'un agent thixotrope, de préférence 1 à 2%, et
- 0 à 2% d'au moins un agent tensioactif ou agent séquestrant,
la somme des composants de la composition de résine n'excédant pas 100%.

12. Utilisation d'une composition selon l'une quelconque des revendications 1 à 11 pour la préparation d'un bloc de déchet enrobé.

13. Utilisation selon la revendication 12, **caractérisé en ce que** ledit bloc de déchet enrobé comprend de 30 à 60% en poids de composition d'enrobage et de 70 à 40% en poids de déchet.

14. Utilisation selon l'une des revendications 12 ou 13, **caractérisée en ce que** ledit bloc de déchet enrobé est préparé par un procédé comprenant les étapes consistant à :
(i) préparer une composition d'enrobage par mélange d'une composition de résine et d'une composition de durcissement telles que définies dans l'une quelconque des revendications 1 à 11, et
(ii) incorporer le déchet à enrober dans ladite composition d'enrobage, et
(iii) enrober et réticuler jusqu'à obtention d'un bloc de déchet enrobé et durci.

15. Utilisation selon la revendication 14, **caractérisée en ce qu'**on ajoute un additif de renfort à la composition d'enrobage avant l'incorporation de déchet à enrober.

16. Utilisation selon l'une quelconque des revendications 12 à 15, **caractérisée en ce que** le déchet à enrober est sous forme solide ou sous forme semi-liquide.

17. Utilisation selon la revendication 16, **caractérisée en ce que** le déchet à enrober est un déchet radioactif ou non radioactif.

18. Utilisation selon l'une des revendications 16 ou 17, **caractérisée en ce que** ledit déchet est choisi parmi les résines échangeuses d'ions anioniques ou cationiques et leurs mélanges, les barreaux de magnésium contaminés, les pièces métalliques irradiées et les cendres radioactives.

19. Utilisation selon l'une des revendications 16 ou 17, **caractérisée en ce que** ledit déchet est choisi parmi les métaux lourds ou les matériaux en contenant, les pièces métalliques divisées provenant du démantèlement d'ateliers industriels et des produits générant ou libérant des substances nocives.

20. Utilisation selon l'une des revendications 12 à 19, **caractérisée en ce qu'**elle concerne l'enrobage et le stockage et/ou le confinement de déchets toxiques pour la santé et/ou pour l'environnement.

## Patentansprüche

1. Beschichtungszusammensetzung zur Lagerung bzw. Einschließung von umwelt- und/oder gesundheitsgefährdendem Müll, **dadurch gekennzeichnet, dass** die Beschichtungszusammensetzung 50 bis 80 Gew.-% einer Harzzusammensetzung auf Basis von Epoxidharz und 20 bis 50 Gew.-% einer härtenden Zusammensetzung mit einem Härter umfasst, der aus zumindest einem Amidoamin besteht, wobei die härtende Zusammensetzung frei von aromatischem Aminhärter ist, und dass die härtende Zusammensetzung einen Härter enthält, der aus zumindest einem Amidoamin besteht, ausgewählt aus den Reaktionsprodukten zwischen einem oder mehreren aliphatischen Polyethylenpolyamin(en) und einer oder mehreren einfach bzw. mehrfach ungesättigten C₁₂-C₁₈-Fettsäure(n), und dass das Epoxidharz eine Aromatizität in der Größenordnung von 40 bis 50 %, ausgedrückt in Prozent aromatischer Kohlenstoffatome zur Gesamtanzahl an Kohlenstoffatomen des Epoxidharzes, hat, und dass die Zusammensetzung frei von jeglicher weiteren wasserabsorbierenden Substanz ist, abgesehen von den reaktiven Komponenten des Epoxy-Amin-Systems.

2. Zusammensetzung nach Anspruch 1,
**dadurch gekennzeichnet, dass** die härtende Zusammensetzung frei von aromatischem Härter ist.

3. Zusammensetzung nach einem der Ansprüche 1 oder 2,
**dadurch gekennzeichnet, dass** das aliphatische Polyethylenpolyamin ausgewählt ist aus den Polyethylentetraminen und den Polyethylenpentaminen.

4. Zusammensetzung nach einem der Ansprüche 1 bis 3,
**dadurch gekennzeichnet, dass** die Harzzusammensetzung ein Epoxidharz enthält, dessen Epoxid-Äquivalentgewicht zwischen 190 und 210 g/mol liegt.

5. Zusammensetzung nach Anspruch 4,
**dadurch gekennzeichnet, dass** das Epoxidharz ein Harz ist, das aus der Reaktion zwischen Bisphenol A und/oder Bisphenol F und Epichlorhydrin resultiert.

6. Zusammensetzung nach einem der Ansprüche 4 oder 5,
**dadurch gekennzeichnet, dass** als Epoxidharz ein Gemisch aus bifunktionellem Epoxidharz und zumindest einem polyfunktionellem Epoxidharz mit einer Funktionalität größer als 2, vorzugsweise 2 bis 5, verwendet wird.

7. Zusammensetzung nach einem der Ansprüche 4 bis 6,
**dadurch gekennzeichnet, dass** als Epoxidharz ein Harzgemisch verwendet wird, das aus der Reaktion zwischen Bisphenol A und/oder Bisphenol F und Epichlorhydrin und zumindest einem polyfunktionellem Harz resultiert.

8. Zusammensetzung nach einem der Ansprüche 4 bis 7,
**dadurch gekennzeichnet, dass** die Epoxidharz-Zusammensetzung zumindest einen Zusatzstoff enthält, ausgewählt aus den reaktiven
Verdünnungsmitteln oder Weichmachern, hydrophoben thixotropen Mitteln, oberflächenaktiven Mitteln und Komplexbildnern.

9. Zusammensetzung nach Anspruch 8,
**dadurch gekennzeichnet, dass** das hydrophobe thixotrope Mittel ausgewählt ist aus hydrophober pyrogener Kieselsäure und modifiziertem organophilem Ton.

10. Zusammensetzung nach einem der Ansprüche 8 oder 9,
**dadurch gekennzeichnet, dass** das Verstärkungsmaterial ausgewählt ist aus kurzen Glasfasern, Kohlenstofffasern, Keramikfasern und organischen Synthesefasern.

11. Zusammensetzung nach einem der Ansprüche 8 bis 10,
**dadurch gekennzeichnet, dass** die Harzzusammensetzung bezüglich des Gesamtgewichts der Harzzusammensetzung umfasst:
- 70 bis 90 Gew.-% eines Epoxidharzes oder eines Gemischs aus Epoxidharz, vorzugsweise 85 bis 90 %,
- 5 bis 15 Gew.-% eines reaktiven Verdünnungsmittels, vorzugsweise 8 bis 12 %,
- 5 bis 15 Gew.-% eines Weichmachers, vorzugsweise 5 bis 10 %,
- 0 bis 3 Gew.-% eines thixotropen Mittels, vorzugsweise 1 bis 2 %, und
- 0 bis 2 % von zumindest einem oberflächenaktiven Mittel oder Komplexbildner,
wobei die Summe der Komponenten der Harzzusammensetzung nicht 100 % übersteigt.

12. Verwendung einer Zusammensetzung nach einem der Ansprüche 1 bis 11 für die Herstellung eines beschichteten Müllblocks.

13. Verwendung nach Anspruch 12,
**dadurch gekennzeichnet, dass** der beschichtete Müllblock 30 bis 60 Gew.-% an Beschichtungszusammensetzung und 70 bis 40 Gew.-% an Müll enthält.

14. Verwendung nach einem der Ansprüche 12 oder 13,
**dadurch gekennzeichnet, dass** der beschichtete Müllblock durch ein Verfahren hergestellt wird, das die nachfolgenden Schritte umfasst:
(i) Herstellen einer Beschichtungszusammensetzung durch Vermischen einer Harzzusammensetzung und einer härtenden Zusammensetzung, wie sie in einem der Ansprüche 1 bis 11 definiert sind, und
(ii) Einbringen des zu beschichtenden Mülls in die Beschichtungszusammensetzung, und
(iii) Beschichten und Vernetzen bis zum Erhalt eines beschichteten und gehärteten Müllblocks.

15. Verwendung nach Anspruch 14,
**dadurch gekennzeichnet, dass** der Beschichtungszusammensetzung vor Einbringen des zu beschichtenden Mülls ein Verstärkungszusatzstoff beigemengt wird.

16. Verwendung nach einem der Ansprüche 12 bis 15,
**dadurch gekennzeichnet, dass** der zu beschichtete Müll in fester Form oder halbflüssiger Form vorliegt.

17. Verwendung nach Anspruch 16,
**dadurch gekennzeichnet, dass** der zu beschichtende Müll radioaktiver oder nicht radioaktiver Müll ist.

18. Verwendung nach einem der Ansprüche 16 oder 17,
**dadurch gekennzeichnet, dass** der Müll ausgewählt ist aus Anionenoder Kationenaustauscherharzen und deren Gemischen, aus kontaminierten Magnesiumstäben, aus verstrahlten Metallteilen und aus radioaktiven Aschen.

19. Verwendung nach einem der Ansprüche 16 oder 17,
**dadurch gekennzeichnet, dass** der Müll ausgewählt ist aus Schwermetallen oder diese enthaltenden Materialien, wobei die abgetrennten Metallteile aus dem Abbau von Industriebetrieben und Produkten stammen, die Schadstoffe erzeugen oder freisetzen.

20. Verwendung nach einem der Ansprüche 12 bis 19,
**dadurch gekennzeichnet, dass** sie die Beschichtung und Lagerung und/oder Einschließung von gesundheits- und/oder umweltgefährdendem Müll betrifft.

## Claims

1. Encapsulating composition for the storage or containment of waste that is toxic to the environment and/or health, **characterized in that** said encapsulating composition comprises 50 to 80% by weight of a resin composition based on epoxy resin and 20 to 50% by weight of a hardening composition comprising a hardener constituted by at least one amidoamine, said hardening composition being devoid of aromatic amine hardening agent and **in that** the hardening composition comprises a hardener constituted by at least one amidoamine chosen from the products of the reaction between one or more aliphatic polyethylene polyamine(s) and one or more C₁₂-C₁₈ mono- or polyunsaturated fatty acid(s), and **in that** said epoxy resin has an aromaticity content of the order of 40 to 50%, expressed as a percentage of aromatic carbon atoms to the total number of carbon atoms of the epoxy resin, and **in that** said composition is devoid of any other water-absorbing substance, apart from the reactive components of the epoxy-amine system.

2. Composition according to claim 1, **characterized in that** said hardening composition is devoid of aromatic hardening agent.

3. Composition according to one of claims 1 or 2, **characterized in that** the aliphatic polyethylene polyamine is chosen from polyethylene tetramines and polyethylene pentamines.

4. Composition according to any one of claims 1 to 3, **characterized in that** the resin composition comprises an epoxy resin with an epoxy equivalent weight comprised between 190 and 210 g/mol.

5. Composition according to claim 4, **characterized in that** said epoxy resin is a resin resulting from the reaction between bisphenol A and/or bisphenol F and epichlorohydrin.

6. Composition according to one of claims 4 or 5, **characterized in that** a mixture of bifunctional epoxy resin and at least one polyfunctional epoxy resin with a functionality greater than 2, preferably from 2 to 5, is used as epoxy resin.

7. Composition according to any one of claims 4 to 6, **characterized in that** a mixture of resin resulting from the reaction between bisphenol A and/or bisphenol F and epichlorohydrin and at least one polyfunctional resin is used as epoxy resin.

8. Composition according to any one of claims 4 to 7, **characterized in that** the epoxy resin composition comprises at least one additive chosen from reactive or plasticizing diluents, hydrophobic thixotropic agents, surfactants and sequestering agents.

9. Composition according to claim 8, **characterized in that** the hydrophobic thixotropic agent is chosen from hydrophobic pyrogenic silica and modified organophilic clay.

10. Composition according to one of claims 8 or 9, **characterized in that** the reinforcing material is chosen from short glass fibres, carbon fibres, ceramic fibres and synthetic organic fibres.

11. Composition according to any one of claims 8 to 10, **characterized in that** the resin composition comprises, relative to the total weight of the resin composition:
- 70 to 90% by weight of an epoxy resin or of an epoxy resin mixture, preferably 85 to 90%,
- 5 to 15% by weight of a reactive diluent, preferably 8 to 12%,
- 5 to 15% by weight of a plasticizing diluent, preferably 5 to 10%,
- 0 to 3% by weight of thixotropic agent, preferably 1 to 2%, and
- 0 to 2% of at least one surfactant or sequestering agent,
the sum of the components of the resin composition not exceeding 100%.

12. Use of a composition according to any one of claims 1 to 11 for the preparation of an encapsulated block of waste.

13. Use according to claim 12, **characterized in that** said encapsulated block of waste comprises 30 to 60% by weight of encapsulating composition and 70 to 40% by weight of waste.

14. Use according to one of claims 12 or 13, **characterized in that** said encapsulated block of waste is prepared by a method comprising the steps consisting of:
(i) preparing an encapsulating composition by mixing a resin composition and a hardening composition as defined in any one of claims 1 to 11, and
(ii) incorporating the waste to be encapsulated into said encapsulating composition, and
(iii) encapsulating and cross-linking until an encapsulated and hardened block of waste is obtained.

15. Use according to claim 14, **characterized in that** a reinforcing additive is added to the encapsulating composition before the incorporation of waste to be encapsulated.

16. Use according to any one of claims 12 to 15, **characterized in that** the waste to be encapsulated is in solid form or in semi-liquid form.

17. Use according to claim 16, **characterized in that** the waste to be encapsulated is radioactive or non-radioactive waste.

18. Use according to one of claims 16 or 17, **characterized in that** said waste is chosen from anionic or cationic ion-exchange resins and mixtures thereof, contaminated magnesium bars, irradiated metallic parts and radioactive ash.

19. Use according to one of claims 16 or 17, **characterized in that** said waste is chosen from heavy metals or materials containing them, divided metallic parts originating from the dismantling of industrial plants and products that generate or release harmful substances.

20. Use according to one of claims 12 to 19, **characterized in that** it involves the encapsulating and storage and/or containment of waste that is toxic to health and/or the environment.
